# FASCICULE DE BREVET EUROPEEN

(11) **EP 2 282 262 B1**
(45) Date de publication et mention de la délivrance du brevet: **30.04.2014**
(21) Numéro de dépôt: 10354033.2
(22) Date de dépôt: 17.06.2010
(51) Int. Cl.: H04L 29/08

(54) **Dispositif communicant, méthode de communication entre ledit dispositif et un réseau, unité d'interface entre ledit dispositif et ledit réseau**
Kommunikationsgerät, Verfahren zur Kommunikation zwischen besagtem Gerät und einem Netzwerk, Schnittstelleneinheit zwischen besagtem Gerät und besagtem Netzwerk
Communication device, communication method between said device and a network, interfacing unit between said device and said network

(30) Priorité: 06.08.2009 FR 0903874
(43) Date de publication de la demande: 09.02.2011
(73) Titulaire: Schneider Electric Industries SAS, 92500 Rueil-Malmaison (FR)
(72) Inventeur: Marie, Sylvain, 38050 Grenoble Cedex 09 (FR); Olinet, Patrick, 38050 Grenoble Cedex 09 (FR); Brun, Jean-Michel, 38050 Grenoble Cedex 09 (FR)
(74) Mandataire: Picard, Laurent

(56) Documents cités:
- WO-A2-2004/070571
- US-A1- 2008 013 463
- US-B1- 6 658 489

## Description

### DOMAINE TECHNIQUE DE L'INVENTION

L'invention relève du domaine de la communication entre des dispositifs connectés à un réseau ou plusieurs réseaux de communication, de tels réseaux pouvant être, par exemple, tout bus de terrain, système ad hoc de communication, connexion point à point. De tels dispositifs communicants incluent notamment des équipements industriels de distribution électrique, ou de gestion technique du bâtiment tertiaire ou résidentiel. De tels dispositifs incluent également les dispositifs de commande et d'acquisition de données de surveillance, qualifiés en anglais de « Supervisory Control And Data Acquisition », ou en agrégé « SCADA ».

En particulier, l'invention relève du domaine de la connectivité entre ce type de dispositif communicant et un réseau ou plusieurs réseaux, notamment sur l'interopérabilité de ces dispositifs en fonction de l'évolution des protocoles de communication utilisés par lesdits réseaux ou de l'évolution de ces réseaux.

Plus exactement, l'invention concerne une méthode de communication pour dispositif communicant pourvu de moyens de communication destinés à être connectés directement ou indirectement à un réseau, ladite méthode comprenant :
- l'exécution d'au moins une application dudit dispositif communicant,
- l'établissement d'une interaction entre ladite application et lesdits moyens de communication par l'entremise d'un pilote,
- la communication de données entre ladite application et lesdits moyens de communication, et
- une mise à niveau dudit dispositif communicant par rapport à l'utilisation d'un nouveau protocole de communication dudit réseau.

L'invention concerne également un dispositif communicant destiné à être connecté à un réseau comprenant :
- une application dans une partie logicielle dudit dispositif communicant,
- des moyens de communication destinés à être connectés directement ou indirectement au dit réseau,
- un pilote dans ladite partie logicielle pour établir une interaction entre ladite application et lesdits moyens de communication pour la communication de données entre ladite application et lesdits moyens de communication, et
- des moyens de mise à niveau dudit dispositif par rapport à l'utilisation d'un nouveau protocole de communication dudit réseau,

L'invention concerne également une unité d'interface destinée à être connectée à un dispositif communicant permettant d'établir une communication avec un réseau utilisant un nouveau protocole de communication.

### ÉTAT DE LA TECHNIQUE

L'évolution des protocoles de communication utilisés sur certains réseaux nécessite des mises à niveau répétées des dispositifs communicants ou leur remplacement, afin d'assurer leur connectivité avec le réseau utilisé et leur interopérabilité avec les autres dispositifs.

Un certain nombre de standards permettent déjà à des systèmes hétérogènes de communiquer de manière transparente. Ces standards peuvent être mis en oeuvre sur des réseaux présentant des modes d'implémentation différents, tel que les réseaux utilisant le protocole Ethernet connus sous la norme internationale ISO/IEC 8802-3, les réseaux sans fil, ou les réseaux utilisant les courants porteurs en ligne.

Dans le domaine de l'internet, il existe un certain nombre de protocoles de communication « haut niveau » permettant d'assurer la connectivité d'applications sur un réseau et l'interopérabilité avec d'autres dispositifs connectés sur ledit réseau. Par « haut niveau », on entend généralement proche des applications, par opposition à « bas niveau » signifiant souvent proche des ressources matérielles. Certains de ces protocoles « haut niveau » peuvent permettre, par exemple, le démarrage automatique de périphériques récents dès leur branchement. Ils peuvent permettre également à des équipements d'être découverts automatiquement sur le réseau et d'être utilisés de manière simple par les applications.

Cependant, les réseaux internet ne sont pas prêts de remplacer totalement les réseaux de terrain ou bus de terrain. Par ailleurs, ces réseaux internet présentent généralement différents modes d'implémentation parmi lesquels une sélection est nécessaire. La solution consistant à suréquiper un dispositif communicant pour prendre en compte tous les protocoles de communication et supports de communication possibles n'est pas satisfaisante, d'autant que ces standards liés à l'internet évoluent sur des cycles de vie beaucoup plus courts que les dispositifs communicants objet de l'invention.

Un standard de communication industriel permet généralement de fixer au moins un mode de transmission physique qualifié de support de communication, et un format des données échangées pour établir une trame des messages transmis entre deux ou plusieurs dispositifs communicants qualifié de protocole de communication. Pour transmettre une intention métier, il est généralement nécessaire d'exprimer cette intention sous la forme d'un message dans un langage spécifié par le protocole de communication, afin de le transmettre sur le réseau. Par intention métier, on entend généralement une information relevant de l'application mise en oeuvre par un dispositif communicant, par exemple un ordre de commande d'un dispositif tiers pour mesurer un courant instantané. Ces messages échangés sont conformes à un modèle de données qui est intimement lié au protocole de communication et au support de communication. Cette correspondance entre les intentions métiers et les messages réellement échangés sur le réseau est établie par des moyens d'implémentation communément appelés pilotes ou programmes pilotes, qui sont associés à des moyens de communication du dispositif communicant. A titre d'exemple, ces moyens de communication peuvent inclure un connecteur de communication destiné à être connecté au réseau. Les pilotes rassurent aussi la traduction d'un message du réseau en une intention métier traité par l'application.

Pour les protocoles de communication les plus anciens, les moyens d'implémentation et les moyens de communication sont généralement intégrés initialement dans le dispositif communicant pour assurer la connectivité et l'interopérabilité. Certains protocoles de communication plus récents peuvent faciliter l'interopérabilité en permettant à un dispositif communicant de communiquer sa description à un autre dispositif. D'autres protocoles de communication récents ont une interface de programmation standardisée dans plusieurs langages de programmation courants. Dans ce cas, ce type d'interface de programmation est directement utilisé entre l'application mise en oeuvre par le dispositif communicant et le pilote associé aux moyens de communication.

Le document de l'art antérieure WO 2004/070571 divulgue un procédé de mise a jour d'un pilote faisant partie du kernel, précédant un mis a jour du version de firmware.

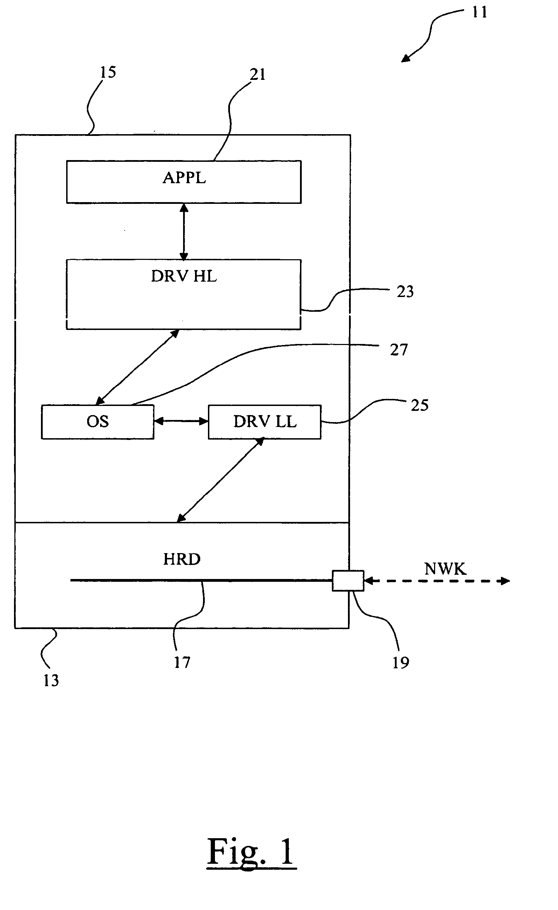

Un exemple de dispositif communicant selon l'art antérieur est représenté à la figure 1. Le dispositif communicant 11 représenté comporte des ressources matérielles 13, souvent qualifié en anglais de « hardware », ainsi que des ressources logicielles 15. Dans le dispositif communicant 11, les ressources matérielles comportent des moyens de communication, en l'occurrence un bus interne de données 17 relié à un connecteur de communication 19. Les ressources logicielles comportent, quant à elles, au moins une application 21, souvent qualifiée d'application embarquée. Une telle application correspond généralement à un programme informatique ou logiciel permettant au dispositif communicant de mettre en oeuvre l'une de ces fonctions. Par exemple, une telle application peut correspondre à toute application logicielle de machine à état, de contrôle et/ou de commande, de surveillance, ou de régulation.

Les ressources logicielles comportent, en outre, au moins un pilote, ou programme pilote, associé aux moyens de communication, ledit pilote permettant à une application du dispositif communicant d'interagir avec lesdits moyens de communication. Ce pilote est qualifié en anglais de « driver ». En d'autres termes, un tel pilote permet d'établir une communication entre l'application du dispositif communicant et le réseau, dans les sens de réception et d'envoi.

Dans le dispositif communicant représenté à la figure 1, les ressources logicielles comportent un pilote haut niveau 23, pour fonctionner entre l'application et un système d'exploitation 27, et un pilote bas niveau 25, pour fonctionner entre ledit système d'exploitation et le connecteur de communication 19.

Les pilotes utilisés sont généralement adaptés à un protocole de communication et à un support de communication prédéterminé qui sont liés au réseau sur lequel le dispositif communicant est connecté. La pile allant du pilote haut niveau 23, ou en anglais « protocol driver », en haut, au ressources matérielles, en bas, en passant par le pilote bas niveau 25, permet de produire une communication dite « sur le fil » conforme au support de communication, au protocole de communication, et notamment aux conventions de format, de contenu et/ou d'échange des messages échangés sur le support de communication. Inversement, la pile permet, de bas en haut, de réceptionner une communication conforme au protocole de communication reçue « sur le fil » et de la transformer en intentions métier pour mettre en oeuvre l'application.

Le pilote haut niveau 23 comporte généralement une interface de programmation que doit appeler l'application pour utiliser cette pile, ou inversement qu'utilise la pile pour appeler ladite application. L'interface de programmation est également qualifiée en anglais de « Application Programming Interface » ou en abrégé de « API ». Cette interface de programmation n'est généralement pas imposée et reste le choix du fournisseur du pilote. L'interface de programmation est souvent suffisamment légère pour abstraire les complexités éventuelles du support et du protocole de communication.

Généralement, le pilote haut niveau 23 comporte des moyens d'implémentation pour établir une correspondance entre l'interface de programmation et les messages échangés sur le réseau. Ces moyens d'implémentation sont généralement spécifiques au protocole de communication utilisé, et notamment aux conventions de format, de contenu et/ou d'échange des messages échangés sur le support de communication. L'interface de programmation est elle-même dépendante du protocole de communication, voire notamment des conventions de format, de contenu et/ou d'échange des messages échangés sur le support de communication. Ainsi toute évolution des pilotes, liée notamment à un changement du support de communication du réseau et/ou du protocole de communication nécessite souvent un arrêt total de l'application pour une mise à niveau de celle-ci et des pilotes, voire du matériel. Ceci implique donc une interruption de l'exécution de l'application du dispositif communicant.

Même si l'évolution du protocole de communication porte uniquement sur les conventions de format, de contenu et/ou d'échange des messages échangés sur le support de communication, et non sur le support de communication en tant que tel, il est nécessaire de mettre à niveau le pilote haut niveau et l'application, ce qui oblige un arrêt de ladite application et un redémarrage de celle-ci. Ce cas de figure est pourtant assez fréquent, notamment pour l'évolution des protocoles de type internet. Si l'évolution du protocole de communication porte également sur le support de communication ainsi que le matériel, le pilote bas niveau 25 doit également être mis à niveau.

Il s'en suit que la durée de vie d'un dispositif communicant 11 selon l'art antérieur dépend du choix et du maintien dans le temps d'un support de communication et d'un protocole de communication standard. Le moindre changement de ce support de communication et de ce protocole de communication a un impact, non seulement sur les ressources matérielles 13 dispositif communicant, mais également sur les pilotes 23, 25 et indirectement sur l'application 21. Un tel changement nécessite, dans la plupart des cas, d'arrêter et de redémarrer l'application pour remettre à niveau le dispositif communicant.

### EXPOSÉ DE L'INVENTION

L'invention vise à remédier aux inconvénients des méthodes de communication et des dispositifs communicants de l'art antérieur en proposant une méthode de communication pour dispositif communicant pourvu de moyens de communication destinés à être connectés directement ou indirectement à un réseau, ladite méthode comprenant :
- l'exécution d'au moins une application dudit dispositif communicant,
- l'établissement d'une interaction entre ladite application et lesdits moyens de communication par l'entremise d'un pilote,
- la communication de données entre ladite application et lesdits moyens de communication, et
- une mise à niveau dudit dispositif communicant par rapport à l'utilisation d'un nouveau protocole de communication dudit réseau,

ladite méthode étant **caractérisée en ce que** ladite mise à niveau comprend le chargement d'au moins une partie d'un pilote haut niveau modulaire d'un connecteur de communication desdits moyens de communication, ledit pilote haut niveau étant spécifique au dit nouveau protocole de communication et conforme à au moins une interface de programmation prédéterminée de ladite application pour établir une correspondance entre ladite interface de programmation prédéterminée et des messages spécifiques au dit nouveau protocole de communication, et en ce que l'établissement d'une interaction entre ladite application et lesdits moyens de communication comprend le couplage de ladite application au dit pilote haut niveau par l'entremise de ladite interface de programmation prédéterminée grâce à une infrastructure modulaire, la communication de données étant réalisée entre ladite application et ledit connecteur de communication.

De préférence, le chargement d'au moins une partie d'un pilote haut niveau modulaire comprend le chargement d'un premier module pilote haut niveau spécifique à des nouvelles conventions de format et/ou d'échange de messages échangés sur le réseau et le chargement d'un second module pilote haut niveau spécifique à des nouvelles conventions de contenu desdits messages.

En particulier, le chargement d'au moins une partie du pilote haut niveau modulaire comprend :
- la connexion d'une unité d'interface au connecteur de communication, ladite unité d'interface comportant des moyens de stockage contenant au moins le premier module pilote haut niveau, et
- le transfert dudit premier module pilote haut niveau dans le dispositif communicant.

Avantageusement, le chargement d'au moins une partie du pilote haut niveau modulaire comprend :
- la connexion du dispositif communicant à internet, et
- le transfert du second module pilote haut niveau dans ledit dispositif communicant.

Selon un mode de réalisation de l'invention, la mise à niveau du dispositif communicant est également réalisée par rapport à l'utilisation d'un nouveau support de communication dudit réseau et comprend, en outre, l'ajout de moyens d'adaptation de protocole entre le connecteur de communication et ledit nouveau support de communication. De préférence, l'ajout de moyens d'adaptation de protocole comprend la connexion d'une unité d'interface comportant lesdits moyens d'adaptation de protocole entre le connecteur de communication et le nouveau support de communication.

Avantageusement, la mise à niveau du dispositif communicant comprend, en outre, le chargement d'un module pilote bas niveau spécifique au dit nouveau support de communication, et l'établissement d'une interaction entre l'application et le connecteur de communication comprend, en outre, l'utilisation dudit module pilote bas niveau par l'entremise d'un système d'exploitation du dispositif communicant. De préférence, le chargement du module pilote bas niveau, comprend :
- la connexion d'une unité d'interface au connecteur de communication, ladite unité d'interface comportant des moyens de stockage contenant ledit module pilote bas niveau, et
- le transfert dudit pilote bas niveau dans le dispositif communicant.

Selon un mode de réalisation de l'invention, la mise à niveau comprend le démarrage de ladite mise à niveau de manière automatique à l'aide d'un module de démarrage, lorsque la connexion d'au moins une unité d'interface a été réalisée.

Selon un mode de réalisation de l'invention, la mise à niveau du dispositif communicant comprend le déchargement de pilotes qui ne sont plus utilisés.

Avantageusement, la mise à niveau comprend le déchargement d'au moins une partie du pilote haut niveau modulaire et/ou du module pilote bas niveau, et/ou le retrait de moyens d'adaptation de protocole.

L'invention concerne également un dispositif communicant destiné à être connecté à un réseau comprenant :
- une application dans une partie logicielle dudit dispositif communicant,
- des moyens de communication destinés à être connectés directement ou indirectement au dit réseau,
- un pilote dans ladite partie logicielle pour établir une interaction entre ladite application et lesdits moyens de communication pour la communication de données entre ladite application et lesdits moyens de communication, et
- des moyens de mise à niveau dudit dispositif par rapport à l'utilisation d'un nouveau protocole de communication dudit réseau,
ledit dispositif étant **caractérisé en ce que** lesdits moyens de mise à niveau comprennent des moyens de chargement d'au moins une partie d'un pilote haut niveau modulaire d'un connecteur de communication desdits moyens de communication, ledit pilote haut niveau étant spécifique au dit nouveau protocole de communication et conforme à au moins une interface de programmation prédéterminée de ladite application pour établir une correspondance entre ladite interface de programmation prédéterminée et des messages spécifiques au dit nouveau protocole de communication, et en ce que la partie logicielle présente une infrastructure modulaire permettant le couplage de ladite application au dit pilote haut niveau par l'entremise de ladite interface de programmation prédéterminée.

De préférence, le pilote haut niveau modulaire comprend un premier module pilote haut niveau à des nouvelles conventions de format et/ou d'échange de messages échangés sur le réseau et un second module pilote haut niveau spécifique à des nouvelles conventions de contenu desdits messages. En particulier, les moyens de chargement comprennent le connecteur de communication et une unité d'interface comportant des moyens de stockage contenant au moins le premier module pilote haut niveau, ladite unité d'interface étant destinée à être connectée au dit connecteur de communication pour transférer ledit premier module pilote haut niveau dans le dispositif communicant.

Selon un mode de réalisation, les moyens de mise à niveau comprennent une unité d'interface destinée à être connectée entre le connecteur de communication et le nouveau support de communication du réseau, ladite unité d'interface comportant des moyens d'adaptation de protocole entre le connecteur de communication et le nouveau support de communication. De préférence, le dispositif comporte un module de démarrage pour démarrer la mise à niveau de manière automatique, lorsque la connexion l'unité d'interface au connecteur de communication a été réalisée.

L'invention concerne également une unité d'interface destinée à être connectée à un dispositif communicant permettant d'établir une communication avec un réseau utilisant un nouveau protocole de communication, ledit dispositif étant **caractérisée en ce que** ladite unité comporte :
- des ressources matérielles incluant un premier connecteur destiné à être connecté à un connecteur de communication dudit dispositif communicant, et
- des moyens de stockage contenant au moins une partie d'un pilote haut niveau modulaire dudit connecteur de communication, ledit pilote haut niveau étant spécifique au dit nouveau protocole de communication et conforme à au moins une interface de programmation prédéterminée d'une application dudit dispositif communicant pour établir une correspondance entre ladite interface de programmation prédéterminée et des messages spécifiques au dit nouveau protocole de communication.

De préférence, l'unité d'interface comporte :
- une interface de communication destinée à être connectée au réseau pour établir une connexion entre le dispositif communicant et ledit réseau, et
- des moyens d'adaptation de protocole connectés entre le premier connecteur et ladite interface de communication pour la mise à niveau dudit dispositif communicant par rapport à un nouveau support de communication dudit réseau.

### BRÈVE DESCRIPTION DES FIGURES

D'autres avantages et caractéristiques ressortiront plus clairement de la description qui suit de modes particuliers de réalisation de l'invention, donnés à titre d'exemples non limitatifs, et représentés dans les figures annexées.
La figure 1 représente de manière schématique un dispositif communicant selon l'art antérieur.
La figure 2 représente un algorithme d'une méthode de communication pour dispositif communicant selon l'invention.
La figure 3 représente de manière plus détaillées les étapes de démarrage de la mise à niveau, de chargement et de déchargement des pilotes.
La figure 4 représente de manière schématique un dispositif communicant et une unité d'interface selon l'invention.
Les figures 5A et 5B représentent de manière schématique deux unités d'interfaces pouvant être utilisées avec le dispositif de communication selon l'invention.

### DESCRIPTION DETAILLEE D'UN MODE DE RÉALISATION

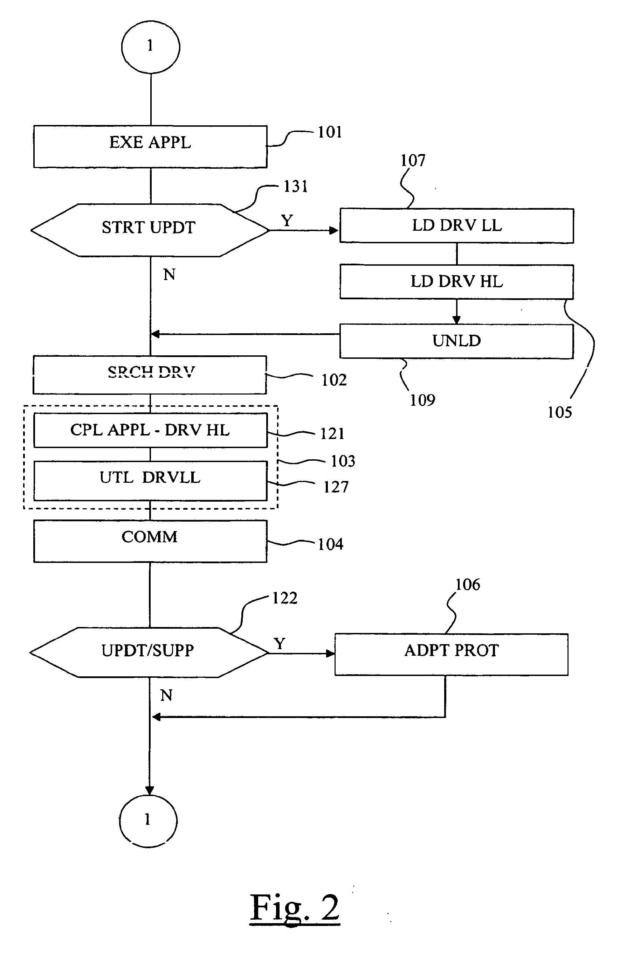

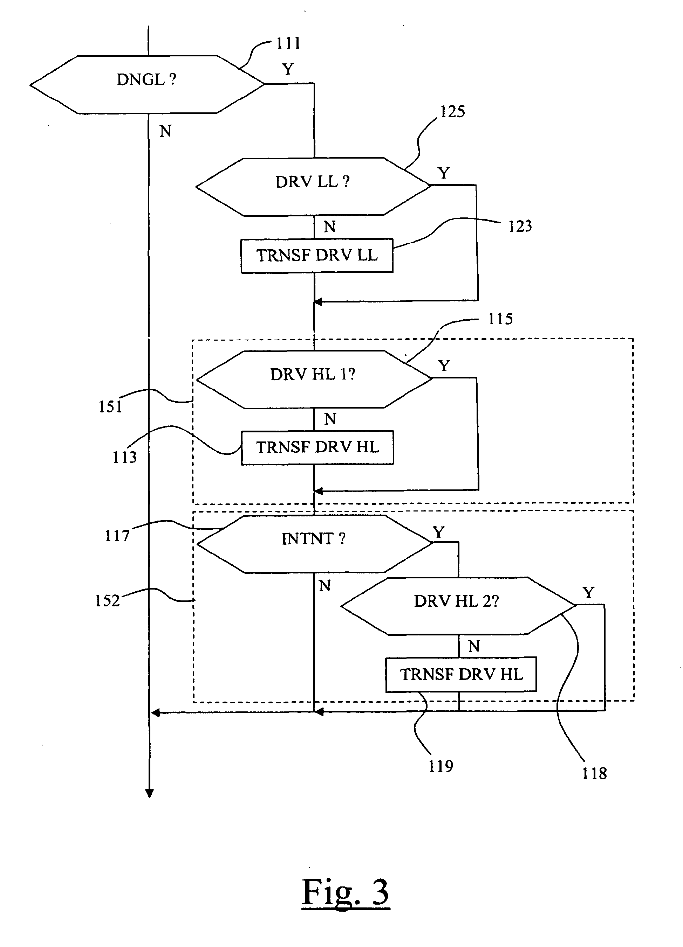

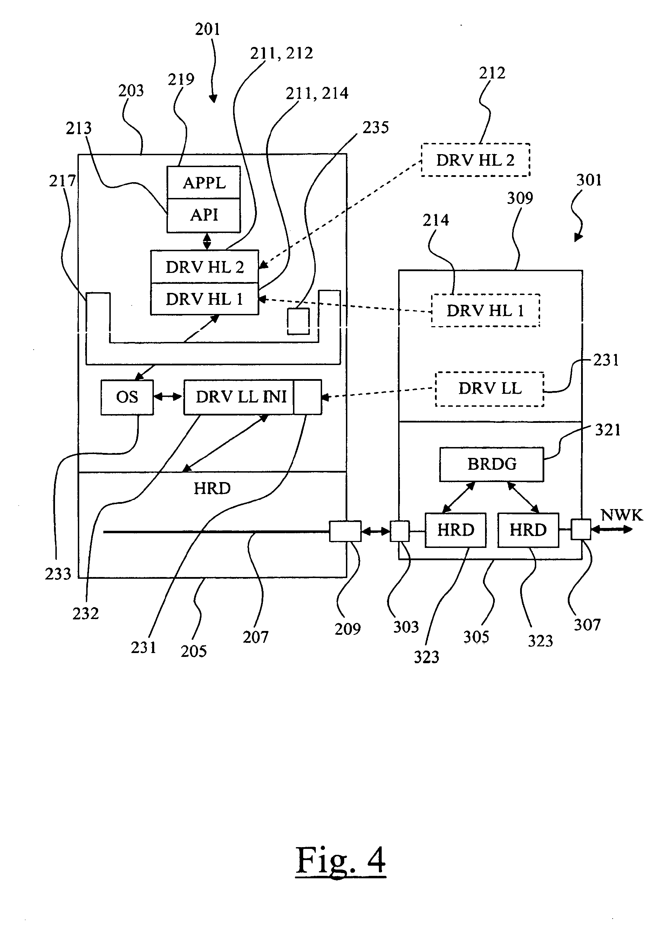

A titre illustratif, une méthode de communication pour la communication de données entre un dispositif communicant et un réseau est illustrée par un algorithme représenté sur les figures 2 et 3. Le dispositif communicant et les moyens techniques mis en oeuvre pour réaliser cette communication de données sont, quant à eux, représentés sur la figure 4. Il est à noter que le dispositif communicant peut être tout équipement ayant vocation à interagir avec au moins un réseau, tel qu'un automate industriel, un contrôleur domotique résidentiel, un équipement intelligent d'un tableau électrique tertiaire et/ou industriel ou un système de supervision, par exemple un dispositif de commande et d'acquisition de données de surveillance, qualifié en anglais de « Supervisory Control And Data Acquisition », ou en abrégé « SCADA ». La dénomination « réseau » englobe tout bus de terrain.

En référence à la figure 4, le dispositif communicant 201 est pourvu de ressources logicielles 203 et de ressources matérielles 205. Les ressources matérielles 205 comprennent des moyens de communication incluant un bus interne de données 207 et au moins un connecteur de communication 209 destiné à être connecté directement ou indirectement à un réseau. Ce bus interne de données 207 et le connecteur de communication 209, peuvent être, à titre d'exemple, de type « USB », acronyme de l'anglais « Universal Serial Bus », correspondant à des moyens de communication série servant à connecter des périphériques informatiques à un ordinateur. D'autres bus séries ou parallèles peuvent également être envisagés et associés à un système de connexion quelconque. Lors de la mise en oeuvre de la méthode de communication, la communication de données entre le dispositif communicant et le réseau est réalisée par les moyens de communication, en l'occurrence par l'entremise du connecteur de communication 209.

En référence à la figure 2, la méthode de communication comporte des étapes dédiées à la communication de données. En plus de ces étapes, la méthode de communication comprend des étapes dédiées à une mise à niveau du dispositif communicant 201 par rapport à l'utilisation d'un nouveau protocole de communication du réseau. Ce nouveau protocole de communication peut être essentiellement constitué par, ou inclure, les conventions de format, de contenu et/ou d'échange des messages échangés sur le support de communication. La mise à niveau du dispositif communicant 201 peut également être réalisée par rapport à l'utilisation d'un nouveau support de communication du réseau, et donc d'un nouveau protocole de communication associé au dit support, en incluant éventuellement les conventions décrites précédemment.

Les étapes concernant la communication de données sont généralement fonction d'un protocole de communication et d'un support de communication du réseau utilisé. Ces étapes impliquent la mise en oeuvre d'un pilote ou programme pilote des moyens de communication, en l'occurrence du connecteur de communication 209, par lequel la communication de données est réalisée. Par pilote ou programme pilote du connecteur de communication, on entend des moyens assurant des échanges de messages entre une application et le réseau par le biais d'un protocole de communication spécifique au dit réseau.

Le dispositif de communication 201 avant sa mise à niveau peut comporter un pilote haut niveau du connecteur de communication 209 prévu par défaut. Dans ce cas, ce pilote est défini par rapport à un protocole de communication et un support de communication d'un réseau prévu par défaut. Dans d'autres cas, le dispositif de communication 201 ne comporte pas de pilote prévu par défaut du connecteur de communication 209. En général, le dispositif de communication 201 avant sa mise à niveau comporte un pilote bas niveau du connecteur de communication 209.

En référence à la figure 2, les étapes de la méthode de communication dédiées à la communication de données comprennent l'exécution 101 d'au moins une application 219 disposée dans les ressources logicielles 203 du dispositif communicant 201. Comme cela est visible sur la figure 4, cette application 219 est liée à une interface de programmation 213 lui permettant d'établir une interaction avec les moyens de communication, en l'occurrence avec le connecteur de communication 209, par l'entremise d'un pilote des moyens de communication.

Les étapes de la méthode de communication dédiées à la communication de données comportent une étape de recherche 102 d'un pilote conforme à une interface de programmation requise par l'application 219. Cette étape de recherche 102 peut être mise en oeuvre dès que l'exécution de l'application 219 a démarré. Cette recherche peut être, par exemple, réalisée à l'aide d'un mécanisme de registres de services de manière active ou passive. La recherche peut être également une simple tentative de liaison dynamique avec le pilote. Cette recherche porte notamment sur un pilote des moyens de communication, en l'occurrence du connecteur de communication 209, permettant de communiquer des données avec le réseau. Notons, qu'avant la mise à niveau du dispositif de communication, il est possible qu'aucun pilote du connecteur de communication ne soit disponible et que l'issue de l'étape de recherche 102 ne permette pas de trouver un tel pilote. Dans ce cas, la recherche peut éventuellement porter sur un pilote d'autres moyens de communication, non représentés, permettant de communiquer des données avec le réseau.

Les étapes de la méthode de communication dédiées à la communication de données comportent une étape d'établissement d'une interaction 103 entre l'application 219 et les moyens de communication. Cette étape d'établissement d'une interaction 103 entre l'application 219 et les moyens de communication peut être mise en oeuvre dès qu'un pilote, généralement un pilote haut niveau, a été trouvé pendant l'étape de recherche 102. Cette étape d'établissement d'une interaction 103 entre l'application 219 et les moyens de communication peut comprendre un couplage de l'application 219 au pilote trouvé lors de l'étape de recherche 102, par l'entremise de l'interface de programmation. Cette étape d'établissement d'une interaction 103 entre l'application 219 et les moyens de communication peut comprendre, en outre, l'utilisation d'un pilote bas niveau par l'entremise d'un système d'exploitation 233.

Les étapes de la méthode de communication dédiées à la communication de données comportent la communication 104 de données entre ladite application et lesdits moyens de communication. Par communication, on entend émission et réception, c'est-à-dire une communication dans les deux sens. La communication de données peut être réalisée par l'entremise du connecteur de communication 209, par exemple lors de la mise à niveau, ou par d'autres moyens de communication non représentés.

Tant qu'aucune mise à niveau n'est prévue, les étapes 101, 102, 103 et 104 peuvent être mises en oeuvre en boucle, de manière parallèle, simultanée ou séquencée, comme cela est illustré par la branche principale de l'algorithme représenté à la figure 2.

La mise à niveau du dispositif communicant par rapport à l'utilisation d'un nouveau protocole de communication implique une modification des couches de haut niveau des ressources logicielles. Les couches de bas niveau des ressources logicielles peuvent être également mise à niveau, partiellement ou totalement, tant que ces couches permettent d'assurer le pilotage des moyens de communication, en l'occurrence du connecteur de communication. Plus précisément, la mise à niveau du dispositif communicant nécessite la mise en oeuvre d'un nouveau pilote haut niveau de ce nouveau protocole de communication utilisant le connecteur de communication 209 qui est spécifique au dit nouveau protocole de communication. Pour cela, la mise à niveau du dispositif communiquant comprend le chargement 105 d'au moins une partie d'un pilote haut niveau du connecteur de communication 209, ledit pilote haut niveau étant spécifique au nouveau protocole de communication.

Comme cela est visible sur la figure 4, le pilote haut niveau est représenté, après chargement dans les ressources logicielles 203 du dispositif communicant 201, sous la référence 211. Pour permettre une interaction entre l'application 219 et le connecteur de communication 209, le pilote haut niveau 211 est conforme à au moins une interface de programmation 213 de ladite application. De cette façon, le pilote haut niveau peut permettre d'établir une correspondance entre ladite interface de programmation et des messages spécifiques au nouveau protocole de communication.

Comme cela est visible à la figure 4, les ressources logicielles comprennent une infrastructure modulaire 217 permettant un couplage lâche entre différents modules, en l'occurrence entre l'application 219 et le pilote haut niveau 211. En d'autres termes, le code logiciel utilisé dans le dispositif communicant est fragmenté, ce qui permet d'obtenir cette modularité. Du fait de cette modularité, le pilote haut niveau 211 peut être qualifié de pilote haut niveau modulaire. Par exemple, le pilote haut niveau représenté à la figure 4 comporte un premier module pilote haut niveau 214 spécifique à des nouvelles conventions de format et/ou d'échange de messages échangés sur le réseau et un second module pilote haut niveau 212 spécifique à des nouvelles conventions de contenu desdits messages échangés sur le réseau.

Dans le mode de réalisation représenté sur les figures 2 et 3, le chargement 105 comprend le chargement 151 du premier module pilote haut niveau 214 spécifique à des nouvelles conventions de format et/ou d'échange de messages échangés sur le réseau et le chargement 152 d'un second module pilote haut niveau 212 spécifique à des nouvelles conventions de contenu des messages échangés sur le réseau.

L'étape de chargement 105 est réalisée via le connecteur de communication 209 du dispositif communicant, c'est-à-dire par les mêmes moyens de communication permettant également la communication de données. Cette étape de chargement aurait pu être réalisée via n'importe quel autre port d'entrée du dispositif communicant, par exemple un chargement par internet à l'aide d'un port de communication distinct, ou un chargement par l'entremise d'une carte de stockage par un autre port distinct. Différentes méthodes de chargement peuvent être combinées pour charger un ensemble de pilotes ou de modules pilotes.

Dans le mode de réalisation représenté sur les figures 2 à 4, le chargement 105 du pilote haut niveau modulaire 211, comprend une première étape de connexion 111 d'une unité d'interface 301 au connecteur de communication 209, ladite unité d'interface comportant des moyens de stockage 309 contenant au moins le premier module pilote haut niveau 214. Comme cela est expliqué dans ce qui suit, cette connexion 111 de l'unité d'interface 301 permet également le démarrage de la mise à niveau du dispositif communicant.

Une fois la connexion du module d'interface 301 établie, le chargement 105 du pilote haut niveau modulaire, comprend une étape de transfert 113 dudit premier module pilote haut niveau 214 dans le dispositif communicant 201. Plus précisément, dans le mode de réalisation représenté, un test 115 est effectué pour déterminer si ce transfert à déjà été réalisé, auquel cas l'étape de chargement 105 peut être poursuivie.

Une fois que le chargement 151 du premier module pilote haut niveau 214 a été réalisé, le chargement 105 du pilote haut niveau modulaire, comprend une connexion 117 du dispositif communicant à internet, suivie du transfert 119 du second module pilote haut niveau 212 dans le dispositif communicant 201. La connexion 117 à internet peut être réalisée par l'entremise d'un autre port, non représenté, du dispositif communicant 201. Plus précisément, dans le mode de réalisation représenté, un test 118 est effectué pour déterminer si ce transfert à déjà été réalisé, auquel cas l'étape de chargement 105 peut être terminée.

Dans le mode de réalisation représenté sur les figures 2 et 3, la mise à niveau comprend, en outre, une étape de déchargement 109 de pilotes qui ne sont plus utilisés. La mise à niveau peut également être un retour dans un état initial comprenant le déchargement des modules 211 du pilote haut niveau 211 préalablement chargés, voire d'un module pilote bas niveau qui aurait été associé à un pilote bas niveau initial. L'infrastructure modulaire 217 des ressources logicielles 203 autorise ce type de mise à niveau. Cette étape de déchargement peut être précédée d'une étape de découplage entre l'application 219 et les modules pilotes non représentée. L'étape de découplage et l'étape de déchargement 109, pourraient être aussi toutes les deux réalisées à n'importe quel moment, avant ou après le chargement 105 du pilote haut niveau 211, ce qui permettrait de minimiser la mémoire du dispositif communicant.

Après le chargement des pilotes, notamment du pilote haut niveau 211, et éventuellement après le déchargement des modules pilotes non utilisés, la mise à niveau dudit dispositif communicant peut être poursuivie par la recherche 102 dudit pilote haut niveau 211 et par l'établissement d'une interaction 103 entre l'application 219 et le connecteur de communication 209. Lors de l'établissement de cette interaction, l'application 219 est couplée au pilote haut niveau modulaire 211 par l'entremise de l'interface de programmation 213 de l'application 219. Cet étape de couplage référencée 121 est réalisée grâce à l'infrastructure modulaire 217 des ressources logicielle 203. En effet, l'infrastructure modulaire permet d'établir un couplage lâche entre l'application 219 et chacun des modules pilotes haut niveau 211 chargés dans les ressources logicielles. Ce couplage lâche est réalisé de manière transparente pour l'application qui ne voit que l'interface de programmation 213. Cette interface peut elle-même être modulaire et implémentée en totalité ou en partie par chacun des modules pilotes haut niveau 211. L'interface de programmation est essentiellement définie par rapport à l'application utilisée et notamment à ses intentions métier concernant la communication, quelque soit le protocole de communication ou le support de communication du réseau utilisé. En d'autres termes, l'interface de programmation 213 n'est pas spécifique au protocole de communication ou au support de communication du réseau utilisé. De cette façon, à chaque mise à niveau par rapport à un nouveau protocole ou un support de communication, l'application 219 n'a pas à être modifiée. Grâce à cette structure des ressources logicielles 203, il n'existe plus de relation de dépendance entre les applications, notamment l'application 219, et le protocole ou le support de communication du réseau utilisé. Ceci permet au développeur du dispositif communicant 201 de prédéterminer, une fois pour toute, une interface de programmation métier 213 correspondant aux communications de données nécessaires à la mise en oeuvre des applications du dispositif communicant. Dans ce qui suit, cette interface de programmation 213 peut ainsi être qualifiée d'interface de programmation prédéterminée. C'est essentiellement dans le cas du développement d'anciennes ou de nouvelles applications, nécessitant au moins une opération jusqu'alors non supportée, que cette interface de programmation prédéterminée 213 a besoin d'être modifiée ou complétée par des modules d'interface de programmation additionnels.

Après l'établissement d'une interaction 103 entre l'application 219 et le connecteur de communication 209, la communication 104 de données entre l'application 219 et le connecteur de communication 209 peut être mise ne oeuvre.

La méthode de communication représentée sur les figures 2 et 3 permet également la mise à niveau du dispositif communicant par rapport à un nouveau support de communication dudit réseau. Dans ce cas, le nouveau protocole de communication est également défini par rapport au nouveau support de communication du réseau, et le pilote haut niveau modulaire 211 est non seulement spécifique au nouveau protocole de communication, mais également au nouveau support de communication. Dans ce contexte, pour mettre à niveau le dispositif communicant, il est nécessaire d'ajouter 106 des moyens d'adaptation de protocole 321 ou un pont protocolaire entre le connecteur de communication 209 et le nouveau support de communication. Les moyens d'adaptation de protocoles permettent d'assurer une bonne traduction des messages transmis, en réception ou en émission, depuis ou vers le nouveau support de communication du réseau.

Dans le mode de réalisation représenté à la figure 4, les moyens d'adaptation de protocole, représentés sous la référence 321, sont disposés dans une unité d'interface 301 indépendante du dispositif communicant 201 et destinée à être connectée entre le dispositif communicant 201 et le réseau. La connexion de l'unité d'interface 301 au dispositif communicant se fait par l'entremise du connecteur de communication 209 dudit dispositif et d'un premier connecteur 303 des ressources matérielles 305 de ladite unité d'interface. La connexion de l'unité d'interface 301 au réseau NWK se fait, quant à elle, par l'entremise d'une interface de communication 307, en l'occurrence un second connecteur des ressources matérielles 305 de ladite unité d'interface. Les moyens d'adaptation de protocole 321 sont connectés entre le premier connecteur 303 et l'interface de communication 307 par l'entremise des bus de communication 323. Avantageusement, ce premier connecteur 303 de l'unité d'interface 301 peut être de type USB. Dans un autre mode de réalisation, l'interface de communication 307 pourrait être, par exemple, une antenne. De cette façon, les données transmises entre l'application 219 du dispositif communicant 201 et le réseau NWK sont traduites par les moyens d'adaptation de protocole 321 pour être en conformité avec le format des données échangées sur ledit réseau.

Dans la méthode de communication représentée à la figure 2, l'utilisation ou non des moyens d'adaptation 321 est illustré par un test 122. Ce test 122 de la méthode de communication est purement illustratif. Il est clair que tant que l'unité d'interface 301 n'est pas connectée au connecteur 209, la communication de données est réalisée directement entre ledit connecteur et le réseau. Une fois que l'unité d'interface 301 est connectée, la communication de données entre le connecteur et le réseau se fait par l'entremise des moyens d'adaptation de protocole 321.

Dans le cas de l'utilisation d'un nouveau support de communication, il est parfois nécessaire de modifier les couches de bas niveau des ressources logicielles. Dans le mode de réalisation représenté, la mise à niveau du dispositif communicant comprend, en outre, le chargement 107 d'un module pilote bas niveau 231 spécifique au dit nouveau support de communication. Cette étape de chargement du module pilote bas niveau peut comprendre la connexion 111 de l'unité d'interface 301 au connecteur de communication 209, les moyens de stockage 309 de ladite unité d'interface contenant, en outre, ledit pilote bas niveau. Une fois la connexion du module d'interface 301 établie, le chargement 107 du module pilote bas niveau modulaire, comprend une étape de transfert 123 dudit module pilote bas niveau 231 dans le dispositif communicant 201. Plus précisément, dans le mode de réalisation représenté, un test 125 est effectué pour déterminer si ce transfert à déjà été réalisé, auquel cas l'étape de chargement 105 peut être poursuivie. Cette étape de chargement aurait pu être réalisée via n'importe quel autre port d'entrée du dispositif communicant, par exemple un chargement par internet à l'aide d'un port de communication distinct, ou un chargement par l'entremise d'une carte de stockage par un autre port distinct.

Après le chargement des pilotes, l'établissement d'une interaction 103 entre l'application 219 et le connecteur de communication 209 des moyens de communication est réalisé en utilisant le module pilote bas niveau 231. Lors de l'établissement de cette interaction entre l'application 219 et le connecteur de communication 209, le module pilote bas niveau 231 est associé à un pilote bas niveau initial 232 pour former un nouveau pilote bas niveau. Ce pilote bas niveau 231, 232 est utilisé, lors d'une étape référencée 127, par l'entremise d'un système d'exploitation 233 du dispositif communicant 201.

Après l'établissement d'une interaction 103 entre l'application 219 et le connecteur de communication 209, la communication 104 de données entre l'application 219 et le connecteur de communication 209 peut être mise en oeuvre.

En référence à la figure 2, la méthode de communication comporte une étape 131 de démarrage automatique de l'étape de mise à niveau réalisée par un module de démarrage 235 représenté à la figure 4. En l'occurrence, le module 235 permet de détecter le branchement de l'unité d'interface 301 pour démarrer automatiquement la mise à niveau du dispositif communicant 201. Tant que l'unité d'interface 301 n'est pas connectée au dispositif communicant 201, les données sont éventuellement transmises entre l'application 219 et le réseau NWK, grâce aux étapes 101, 102, 103, 104 décrites précédemment. Lorsque l'unité d'interface 301 est connectée au dispositif communicant, les étapes dédiées à la mise à niveau 107, 105, 109, 106 peuvent être mises en oeuvre.

Ce module de démarrage 235 peut être un logiciel utilisant un mécanisme de branchement et de démarrage automatique permettant aux périphériques d'être reconnus et d'être utilisés automatiquement après le branchement de l'unité d'interface 301. Comme cela est visible sur la figure 4, le module de démarrage 235 peut être stocké dans l'infrastructure modulaire 217 des ressources logicielles 203 du dispositif communicant 201. La mise en oeuvre de ce logiciel de démarrage automatique permet de charger et éventuellement de décharger les modules pilotes 212, 214, 231, tout en assurant une continuité de service du dispositif communicant 201, c'est-à-dire sans arrêter ce dernier.

Le module de démarrage 235 peut également permettre de sécuriser le chargement, par exemple grâce à une vérification d'un certificat de sécurité, ou par tout autre moyen de sécurité. Le module de démarrage peut également permettre la vérification de la version des pilotes à charger.

Plus précisément, un tel mécanisme de branchement et de démarrage automatique peut être disposé dans les couches basses des ressources logicielles. Ce mécanisme peut être mis en oeuvre par le branchement physique du premier connecteur 303 de l'unité d'interface 301 dans le connecteur de communication 209, et par le couplage entre le pilote bas niveau 231, 232 et ledit connecteur. Par ce simple branchement, et optionnellement par l'entremise du module de démarrage 235, il est possible de charger le module pilote bas niveau 231 pour l'associer au pilote bas niveau initial 232, et de rendre accessible les moyens de stockage 309 de l'unité d'interface 301. Le module de démarrage 235 permet ensuite, lorsque le mécanisme de branchement et de démarrage automatique a terminé le traitement associé au branchement de l'unité d'interface 301, le chargement des modules pilotes 211.

Le débranchement de l'unité d'interface 301 peut être réalisé par une étape préalable d'intention de déconnexion, qui peut être déclenché à l'aide de moyens de déverrouillage tel qu'un bouton disposé sur le dispositif communicant 201. Le dispositif communicant 201 peut comporter des moyens de signalisation permettant, en retour, de signaler à l'utilisateur que le débranchement de l'unité d'interface 301 peut être réalisé. Les moyens de signalisation peuvent avoir la forme d'un logiciel de signalisation permettant de signaler à l'utilisateur, par un message, la possibilité de débrancher l'unité d'interface 301. Les moyens de déverrouillage peuvent inclure une fonctionnalité de verrouillage permettant d'empêcher le débranchement physique de l'unité d'interface 301 tant que la signalisation que le débranchement de l'unité d'interface 301 peut être réalisé n'a pas été effective. Entre l'étape d'intention de déconnexion et la déconnexion physique de l'unité d'interface 301, une étape de déchargement 109 des modules pilotes initialement chargés peut être mise en oeuvre afin de nettoyer les mémoires du dispositif communicant.

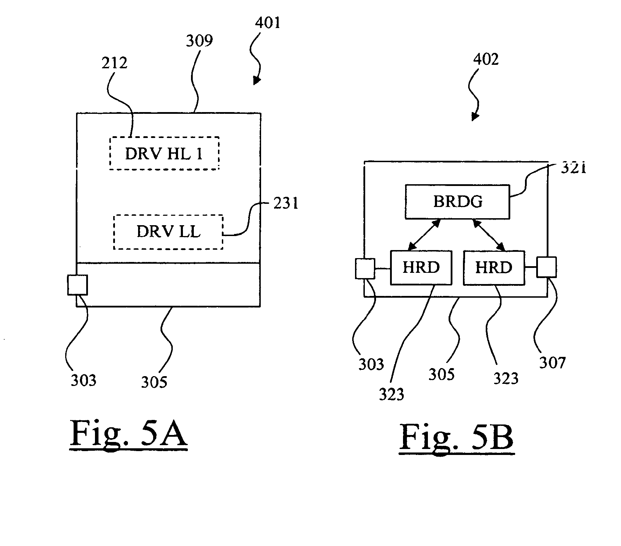

Dans le mode de réalisation représenté à la figure 4, l'unité d'interface 301 comporte, dans un même boîtier, l'unité de stockage 309 contenant le premier module pilote haut niveau 214 et le module pilote bas niveau 231 et les moyens d'adaptation de protocole 321. Dans un autre mode de réalisation représenté sur les figures 5A et 5B, ces deux fonctions distinctes sont dans des unités d'interface séparées. En reprenant les références numériques de la figure 4, les moyens d'adaptation de protocoles 321 ont été dissociés des moyens de stockage 309 pour former deux unités d'interfaces 401, 402 distinctes et séparées représentés respectivement sur les figures 5A et 5B. Dans ce cas, la mise à niveau comprend la connexion de la première unité d'interface 401 pour charger les modules pilotes, la déconnexion de ladite première unité à l'issue de ce chargement, suivie de la connexion de la deuxième unité d'interface 402 pour ajouter les moyens d'adaptation de protocole.

Grâce aux moyens précédemment décrits, lors d'une évolution du protocole et/ou du support de communication du réseau sur lequel est connecté le dispositif communicant, il est possible de remplacer la totalité de la pile de communication dudit dispositif par une version plus récente ou d'ajouter une pile de communication supplémentaire, à chaud, et ceci sans arrêter l'application dudit dispositif. La conformité aux standards de communication est ainsi assurée pendant toute la vie du dispositif communicant.

De la même façon, lors d'une évolution du protocole ou du support de communication du réseau, la communication avec un nouvel équipement conforme à ce nouveau protocole ou du support est possible en conservant les éléments essentiels du dispositif communicant, tels que les applications dudit dispositif.

Dans le dispositif communicant décrit ci-dessus, les algorithmes et les applications sont désormais indépendants du protocole de communication. Ces applications deviennent ainsi plus facilement portables d'un équipement à l'autre, au sein du même domaine métier. Si de surcroît le langage utilisé pour ces applications est un langage interprété, la portabilité est encore plus grande.

Dans le dispositif communicant décrit ci-dessus, toute évolution des ressources matérielles ne nécessite pas un remplacement dudit dispositif ou la mise en oeuvre d'une opération de maintenance dédiée. Ceci constitue un avantage important par rapport au dispositif communicant de l'art antérieur dans lequel l'application est généralement développée en liaison avec le pilote du connecteur de communication, c'est-à-dire dans lequel l'application est liée statiquement ou dynamiquement au pilote, par l'entremise d'une interface de programmation dépendante de celui-ci.

En utilisant le dispositif communicant décrit ci-dessus, il n'est plus nécessaire d'attendre une nouvelle gamme de dispositifs pour bénéficier de la connectivité et de l'interopérabilité à la suite d'une évolution du protocole de communication.

## Revendications

1. Méthode de communication pour dispositif communicant (201) pourvu de moyens de communication (NWK) destinés à être connectés directement ou indirectement à un réseau, ladite méthode comprenant :
- l'exécution (101) d'au moins une application (219) dudit dispositif communicant,
- l'établissement d'une interaction (103) entre ladite application et lesdits moyens de communication par l'entremise d'un pilote,
- la communication (104) de données entre ladite application et lesdits moyens de communication, et
- une mise à niveau dudit dispositif communicant par rapport à l'utilisation d'un nouveau protocole de communication dudit réseau,
**caractérisée en ce que** ladite mise à niveau comprend le chargement (105) d'au moins une partie d'un pilote haut niveau modulaire (211) d'un connecteur de communication (209) desdits moyens de communication, ledit pilote haut niveau étant spécifique au dit nouveau protocole de communication et conforme à au moins une interface de programmation prédéterminée (213) de ladite application pour établir une correspondance entre ladite interface de programmation prédéterminée et des messages spécifiques au dit nouveau protocole de communica ion, et
**en ce que** l'établissement d'une interaction (103) entre ladite application et lesdits moyens de communication comprend le couplage (121) de ladite application au dit pilote haut niveau par l'entremise de ladite interface de programmation prédéterminée grâce à une infrastructure modulaire (217), la communication (104) de données étant réalisée entre ladite application et ledit connecteur de communication.

2. Méthode selon la revendication 1, **caractérisée en ce que** le chargement d'au moins une partie d'un pilote haut niveau modulaire (211) comprend le chargement d'un premier module pilote haut niveau (214) spécifique à des nouvelles conventions de format et/ou d'échange de messages échangés sur le réseau et le chargement d'un second module pilote haut niveau (212) spécifique à des nouvelles conventions de contenu desdits messages.

3. Méthode selon la revendication 2, **caractérisée en ce que** le chargement d'au moins une partie du pilote haut niveau modulaire comprend :
- la connexion (111) d'une unité d'interface (301 ; 401) au connecteur de communication (209), ladite unité d'interface comportant des moyens de stockage (309) contenant au moins le premier module pilote haut niveau, et
- le transfert (113) dudit premier module pilote haut niveau dans le dispositif, communicant (201).

4. Méthode selon l'une quelconque des revendications 2 ou 3, **caractérisée en ce que** le chargement d'au moins une partie du pilote haut niveau modulaire comprend :
- la connexion (117) du dispositif communicant (201) à internet, et
- le transfert (119) du second module pilote haut niveau dans ledit dispositif communicant.

5. Méthode selon l'une quelconque des revendications 1 à 4, **caractérisée en ce que** la mise à niveau du dispositif communicant (201) est également réalisée par rapport à l'utilisation d'un nouveau support de communication dudit réseau et comprend, en outre, l'ajout (106) de moyens d'adaptation de protocole (321) entre le connecteur de communication (209) et ledit nouveau support de communication.

6. Méthode selon la revendication 5, **caractérisée en ce que** l'ajout (106) de moyens d'adaptation de protocole (321) comprend la connexion d'une unité d'interface (301, 402) comportant lesdits moyens d'adaptation de protocole (321) entre le connecteur de communication (209) et le nouveau support de communication.

7. Méthode selon l'une quelconque des revendications 5 ou 6, **caractérisée en ce que** la mise à niveau du dispositif communicant comprend, en outre, le chargement (107) d'un module pilote bas niveau (231) spécifique au dit nouveau support de communication, et **en ce que** l'établissement d'une interaction (103) entre l'application (219) et le connecteur de communication (209) comprend, en outre, l'utilisation (127) dudit module pilote bas niveau par l'entremise d'un système d'exploitation (233) du dispositif communicant (201).

8. Méthode selon la revendication 7, **caractérisée en ce que** le chargement (107) du module pilote bas niveau (231), comprend :
- la connexion (111) d'une unité d'interface (301 ; 401) au connecteur de communication (209), ladite unité d'interface comportant des moyens de stockage (309) contenant ledit module pilote bas niveau, et
- le transfert (123) dudit pilote bas niveau dans le dispositif communicant (201).

9. Méthode selon l'une quelconque des revendications 1 à 8, **caractérisée en ce que** la mise à niveau du dispositif communicant comprend le déchargement (109) de pilotes qui ne sont plus utilisés.

10. Dispositif communicant (201) destiné à être connecté à un réseau (NWK) comprenant :
- une application (219) dans une partie logicielle (203) dudit dispositif communicant,
- des moyens de communication destinés à être connectés directement ou indirectement au dit réseau,
- un pilote dans ladite partie logicielle pour établir une interaction entre ladite application et lesdits moyens de communication pour la communication de données entre ladite application et lesdits moyens de communication, et
- des moyens de mise à niveau dudit dispositif par rapport à l'utilisation d'un nouveau protocole de communication dudit réseau,
**caractérisé en ce que** lesdits moyens de mise à niveau comprennent des moyens de chargement d'au moins une partie d'un pilote haut niveau modulaire (211) d'un connecteur de communication (209) desdits moyens de communication, ledit pilote haut niveau étant spécifique au dit nouveau protocole de communication et conforme à au moins une interface de programmation prédéterminée (213) de ladite application pour établir une correspondance entre ladite interface de programmation prédéterminée et des messages spécifiques au dit nouveau protocole de communication, et
**en ce que** la partie logicielle présente une infrastructure modulaire (217) permettant le couplage de ladite application au dit pilote haut niveau par l'entremise de ladite interface de programmation prédéterminée.

11. Dispositif selon la revendication 10, **caractérisé en ce que** le pilote haut niveau modulaire (211) comprend un premier module pilote haut niveau (214) à des nouvelles conventions de format et/ou d'échange de messages échangés sur le réseau et un second module pilote haut niveau (212) spécifique à des nouvelles conventions de contenu desdits messages.

12. Dispositif selon la revendication 11, **caractérisé en ce que** les moyens de chargement comprennent le connecteur de communication (209) et une unité d'interface (301 ; 401) comportant des moyens de stockage (309) contenant au moins le premier module pilote haut niveau (214), ladite unité d'interface étant destinée à être connectée au dit connecteur de communication pour transférer ledit premier module pilote haut niveau dans le dispositif communicant (201).

13. Dispositif selon l'une quelconque des revendications 10 à 12, caractérisé ce que les moyens de mise à niveau comprennent une unité d'interface (301 ; 402) destinée à être connectée entre le connecteur de communication (209) et un nouveau support de communication du réseau (NWK), ladite unité d'interface comportant des moyens d'adaptation de protocole (321) entre le connecteur de communication (209) et le nouveau support de communication.

14. Unité d'interface (301 ; 401) destinée à être connectée à un dispositif communicant (201) permettant d'établir une communication avec un réseau (NWK) utilisant un nouveau protocole de communication, **caractérisée en ce que** ladite unité comporte :
- des ressources matérielles (305) incluant un premier connecteur (303) destiné à être connecté à un connecteur de communication (209) dudit dispositif communicant, et
- des moyens de stockage (309) contenant au moins une partie d'un pilote haut niveau modulaire (211) dudit connecteur de communication (209), ledit pilote haut niveau étant spécifique au dit nouveau protocole de communication et conforme à au moins une interface de programmation prédéterminée (213) d'une application dudit dispositif communicant pour établir une correspondance entre ladite interface de programmation prédéterminée et des messages spécifiques au dit nouveau protocole de communication.

15. Unité d'interface selon la revendication 14, **caractérisée en ce qu'**elle comporte :
- une interface de communication (307) destinée à être connectée au réseau (NWK) pour établir une connexion entre le dispositif communicant (201) et ledit réseau, et
- des moyens d'adaptation de protocole (321) connectés entre le premier connecteur (303) et ladite interface de communication pour la mise à niveau dudit dispositif communicant par rapport à un nouveau support de communication dudit réseau.

## Patentansprüche

1. Kommunikationsverfahren für kommunizierende Einrichtungen (201) mit Kommunikationsmitteln (NWK), die dazu dienen, direkt oder indirekt an ein Netz angeschlossen zu werden, welches Verfahren
- die Ausführung (101) mindestens einer Anwendung (219) der genannten kommunizierenden Einrichtung,
- die Herstellung einer Interaktion (103) zwischen der genannten Anwendung und den genannten Kommunikationsmitteln über einen Treiber,
- die Datenkommunikation (104) zwischen der genannten Anwendung und den genannten Kommunikationsmitteln sowie
- eine Anpassung der genannten kommunizierenden Einrichtung an die Verwendung eines neuen Kommunikationsprotokolls des genannten Netzes umfasst,
**dadurch gekennzeichnet, dass** die genannte Anpassung das Hochladen (105) mindestens eines Teils eines modularen High-Level-Treibers (211) eines Kommunikationsverbinders (209) der genannten Kommunikationsmittel umfasst, wobei der High-Level-Treiber spezifisch für das genannte neue Kommunikationsprotokoll ausgelegt sowie an mindestens eine festgelegte Programmierschnittstelle (213) der genannten Anwendung angepasst ist, um eine Zuordnung zwischen der genannten, festgelegten Programmierschnittstelle und spezifischen Nachrichten des genannten neuen Kommunikationsprotokolls herzustellen, sowie dadurch, dass die Herstellung einer Interaktion (103) zwischen der genannten Anwendung und den genannten Kommunikationsmitteln die Kopplung (121) zwischen der genannten Anwendung und dem genannten High-Level-Treiber über die genannte festgelegte Programmierschnittstelle dank einer modularen Infrastruktur (217) umfasst, wobei die Datenkommunikation (104) zwischen der genannten Anwendung und dem genannten Kommunikationsverbinder erfolgt.

2. Verfahren nach Anspruch 1, **dadurch gekennzeichnet, dass** das Hochladen mindestens eines Teils eines modularen High-Level-Treibers (211) das Hochladen eines ersten High-Level-Treibermoduls (214), das spezifisch für neue Format- und/oder Übertragungskonventionen der über das Netz übertragenen Nachrichten ausgelegt ist, sowie das Hochladen eines zweiten High-Level-Treibermoduls (212) umfasst, das spezifisch für neue Inhaltskonventionen der genannten Nachrichten ausgelegt ist.

3. Verfahren nach Anspruch 2, **dadurch gekennzeichnet, dass** das Hochladen mindestens eines Teils des modularen High-Level-Treibers
- die Verbindung (111) einer Schnittstelleneinheit (301; 401) mit dem Kommunikationsverbinder (209), welche Schnittstelleneinheit Speichermittel (309) mit mindestens dem ersten High-Level-Treibermodul umfasst, sowie
- die Übertragung (113) des genannten ersten High-Level-Treibermoduls an die kommunizierende Einrichtung (201) umfasst.

4. Verfahren nach irgendeinem der Ansprüche 2 oder 3, **dadurch gekennzeichnet, dass** das Hochladen mindestens eines Teils des modularen High-Level-Treibers
- die Internetanbindung (117) der kommunizierenden Einrichtung (201) sowie
- die Übertragung (119) des zweiten High-Level-Treibermoduls an die kommunizierende Einrichtung umfasst.

5. Verfahren nach irgendeinem der Ansprüche 1 bis 4, **dadurch gekennzeichnet, dass** die Anpassung der kommunizierenden Einrichtung (201) auch in Bezug auf die Verwendung eines neuen Kommunikationsträgers des genannten Netzes erfolgt und zusätzlich das Hinzufügen (106) von Mitteln zur Protokollanpassung (321) zwischen dem Kommunikationsverbinder (209) und dem genannten neuen Kommunikationsträger umfasst.

6. Verfahren nach Anspruch 5, **dadurch gekennzeichnet, dass** das Hinzufügen (106) von Protokoll-Anpassmitteln (321) den Anschluss einer Schnittstelleneinheit (301, 402) umfasst, welche die genannten Mittel zur Protokollanpassung (321) zwischen dem Kommunikationsverbinder (209) und dem neuen Kommunikationsträger umfasst.

7. Verfahren nach irgendeinem der Ansprüche 5 oder 6, **dadurch gekennzeichnet, dass** die Anpassung der kommunizierenden Einrichtung außerdem das Hochladen (107) eines für den neuen Kommunikationsträger spezifisch ausgelegten Low-Level-Treibermoduls (231) umfasst, und dass die Herstellung einer Interaktion (103) zwischen der Anwendung (219) und dem Kommunikationsverbinder (209) außerdem die Verwendung (127) des genannten Low-Level-Treibermoduls über ein Betriebssystem (233) der kommunizierenden Einrichtung (201) umfasst.

8. Verfahren nach Anspruch 7, **dadurch gekennzeichnet, dass** das Hochladen (107) des Low-Level-Treibermoduls (231)
- die Verbindung (111) einer Schnittstelleneinheit (301; 401) mit dem Kommunikations verbinder (209), welche Schnittstelleneinheit Speichermittel (309) mit dem genannten Low-Level-Treibermodul umfasst, sowie
- die Übertragung (123) des genannten Low-Level-Treibers an die kommunizierende Einrichtung (201) umfasst.

9. Verfahren nach irgendeinem der Ansprüche 1 bis 8, **dadurch gekennzeichnet, dass** die Anpassung der kommunizierenden Einrichtung das Herunterladen (109) der nicht mehr benötigten Treiber umfasst.

10. Kommunizierende Einrichtung (201) zum Anschluss an ein Netz (NWK), umfassend:
- eine Anwendung (219) in einem Softwareteil (203) der genannten kommunizierenden Einrichtung,
- Kommunikationsmittel zum direkten oder indirekten Anschluss an das genannte Netz,
- einen im genannten Softwareteil enthaltenen Treiber zur Herstellung einer Interaktion zwischen der genannten Anwendung und den genannten Kommunikationsmitteln zum Zweck der Datenübertragung zwischen der genannten Anwendung und den genannten Kommunikationsmitteln sowie
- Mittel zur Anpassung der genannten kommunizierenden Einrichtung an die Verwendung eines neuen Kommunikationsprotokolls des genannten Netzes,
**dadurch gekennzeichnet, dass** die genannten Anpassungsmittel Mittel zum Hochladen mindestens eines Teils eines modularen High-Level-Treibers (211) eines Kommunikationsverbinders (209) der genannten Kommunikationsmittel umfasst, wobei der High-Level-Treiber spezifisch für das genannte neue Kommunikationsprotokoll ausgelegt sowie an mindestens eine festgelegte Programmierschnittstelle (213) der genannten Anwendung angepasst ist, um eine Zuordnung zwischen der genannten, festgelegten Programmierschnittstelle und spezifischen Nachrichten des genannten neuen Kommunikationsprotokolls herzustellen, sowie dadurch, dass der Softwareteil eine modulare Infrastruktur (217) aufweist, welche die Ankopplung der genannten Anwendung an den genannten High-Level-Treiber über die genannte festgelegte Programmierschnittstelle erlaubt.

11. Verfahren nach Anspruch 10, **dadurch gekennzeichnet, dass** der modulare High-Level-Treiber (211) ein erstes High-Level-Treibermodul (214) für neue Format- und/oder Übertragungskonventionen der über das Netz übertragenen Nachrichten sowie einen spezifischen zweiten High-Level-Treiber (212) für neue Inhaltskonventionen der genannten Nachrichten umfasst.

12. Einrichtung nach Anspruch 11, **dadurch gekennzeichnet, dass** die Hochlademittel den Kommunikationsverbinder (209) und eine Schnittstelleneinheit (301; 401) mit Speichermitteln (309) umfassen, welche mindestens den ersten High-Level-Treiber (214) enthalten, wobei die genannte Schnittstelleneinheit dazu dient, an den genannten Kommunikationsverbinder angeschlossen zu werden, um das genannte erste High-Level-Treibermodul an die kommunizierende Einrichtung (201) zu übertragen.

13. Einrichtung nach irgendeinem der Ansprüche 10 bis 12, **dadurch gekennzeichnet, dass** die Anpassungsmittel eine Schnittstelleneinheit (301; 402) umfassen, die dazu dient, zwischen den Kommunikationsverbinder (209) und einen neuen Kommunikationsträger des Netzes (NWK) geschaltet zu werden, wobei die genannte Schnittstelleneinheit Mittel zur Protokollanpassung (321) zwischen dem Kommunikationsverbinder (209) und dem neuen Kommunikationsträger umfasst.

14. Schnittstelleneinheit (301; 401) zum Anschluss an eine kommunizierende Einrichtung (201), welche die Kommunikation mit einem Netz (NWK) mit neuem Kommunikationsprotokoll erlaubt, **dadurch gekennzeichnet, dass** die genannte Einheit
- Hardwarekomponenten (305) mit einem ersten Verbinder (303) zum Anschluss an einen Kommunikationsverbinder (209) der genannten kommunizierenden Einrichtung und
- Speichermittel (309) mit mindestens einem Teil eines modularen High-Level-Treibers (211) des genannten Kommunikationsverbinders (209) umfasst, wobei der High-Level-Treiber spezifisch für das genannte neue Kommunikationsprotokoll ausgelegt sowie an mindestens eine festgelegte Programmierschnittstelle (213) einer Anwendung der genannten Kommuni kationseinrichtung angepasst ist, um eine Zuordnung zwischen der genannten, festgelegten Programmierschnittstelle und spezifischen Nachrichten des genannten neuen Kommunika tionsprotokolls herzustellen.

15. Schnittstelleneinheit nach Anspruch 14, **dadurch gekennzeichnet, dass** sie
- eine zum Anschluss an das Netz (NWK) bestimmte Kommunikationsschnittstelle (307) zur Herstellung einer Verbindung zwischen der kommunizierenden Einrichtung (201) und dem genannten Netz sowie
- zwischen den ersten Verbinder (303) und die genannte Kommunikationsschnittstelle geschaltete Protokoll-Anpassmittel (321) zur Anpassung der genannten kommunizierenden Einrichtung an einen neuen Kommunikationsträger des genannten Netzes umfasst.

## Claims

1. A communication method for a smart device (201) provided with communication means (NWK) designed to be directly or indirectly connected to a network, said method comprising:
- execution (101) of at least one application (219) of said smart device,
- establishment of an interaction (103) between said application and said communication means by means of a pilot,
- data communication (104) between said application and said communication means, and
- updating of said smart device with respect to use of a new communication protocol of said network,
**characterized in that** said updating comprises loading (105) of at least a part of a modular high-level pilot (211) of a communication connector (209) of said communication means, said high-level pilot being specific to said new communication protocol and in compliance with at least one predefined programming interface (213) of said application to establish a correspondence between said predefined programming interface and messages specific to said new communication protocol, and
**in that** establishment of an interaction (103) between said application and said communication means comprises coupling (121) of said application to said high-level pilot via said predefined programming interface by means of a modular infrastructure (217), data communication (104) being performed between said application and said communication connector.

2. The method according to claim 1, **characterized in that** loading of at least a part of a modular high-level pilot (211) comprises loading of a first high-level pilot module (214) specific to new conventions of format and/or of exchange of messages exchanged over the network and loading of a second high-level pilot module (212) specific to new content conventions of said messages.

3. The method according to claim 2, **characterized in that** loading of at least a part of the modular high-level pilot comprises:
- connection (111) of an interface unit (301 ; 401) to the communication connector (209), said interface unit comprising storage means (309) containing at least the first high-level pilot module, and
- transfer (113) of said first high-level pilot module to the smart device (201).

4. The method according to any one of claims 2 or 3, **characterized in that** loading of at least a part of the modular high-level pilot comprises:
- connection (117) of the smart device (201) to internet, and
- transfer (119) of the second high-level pilot module to said smart device.

5. The method according to any one of claims 1 to 4, **characterized in that** updating of the smart device (201) is also performed with respect to use of a new communication medium of said network and further comprises addition (106) of protocol matching means (321) between the communication connector (209) and said new communication medium.

6. The method according to claim 5, **characterized in that** edition (106) of protocol matching means (321) comprises connection of an interface unit (301, 402) comprising said protocol matching means (321) between the communication connector (209) and the new communication medium.

7. The method according to any one of claims 5 or 6, **characterized in that** updating of the smart device further comprises loading (107) of a low-level pilot module (231) specific to said new communication medium, and
**in that** establishment of an interaction (103) between the application (219) and the communication connector (209) further comprises the use (127) of said low-level pilot module via an operating system (233) of the smart device (201).

8. The method according to claim 7, **characterized in that** loading (107) of the low-level pilot module (231) comprises:
- connection (111) of an interface unit (301 ; 401) to the communication connector (209), said interface unit comprising storage means (309) containing said low-level pilot module, and
- transfer (123) of said low-level pilot module to the smart device (201).

9. The method according to any one of claims 1 to 8, **characterized in that** updating of the smart device comprises downloading (109) of the pilots which are no longer used.

10. A smart device (201) designed to be connected to a network (NWK) comprising:
- an application (219) in a software part (203) of said smart device,
- communication means designed to be directly or indirectly connected to said network,
- a pilot in said software part to establish an interaction between said application and said communication means for data communication between said application and said communication means, and
- updating means of said device with respect to the use of a new communication protocol of said network,
**characterized in that** said updating means comprise means for loading at least a part of a modular high-level pilot (211) of a communication connector (209) of said communication means, said high-level pilot being specific to said new communication protocol and in compliance with at least one predefined programming interface (213) of said application to establish a correspondence between said predefined programming interface and messages specific to said new communication protocol, and
**in that** the software part presents a modular infrastructure (217) enabling coupling of said application to said high-level pilot via said predefined programming interface.

11. The device according to claim 10, **characterized in that** the modular high-level pilot (211) comprises a first high-level pilot module (214) with new conventions of format and/or exchange of messages exchanged over the network and a second high-level pilot module (212) specific to new content conventions of said messages.

12. The device according to claim 11, **characterized in that** the loading means comprise the communication connector (209) and an interface unit (301 ; 401) comprising storage means (309) containing at least the first high-level pilot module (214), said interface unit being designed to be connected to said communication connector to transfer said first high-level pilot module to the smart device (201).

13. The device according to any one of claims 10 to 12, **characterized in that** the updating means comprise an interface unit (301 ; 402) designed to be connected between the communication connector (209) and a new communication medium of the network (NWK), said interface unit comprising protocol matching means (321) between the communication connector (209) and the new communication medium.

14. An interface unit (301 ; 401) designed to be connected to a smart device (201) enabling a communication to be established with a network (NWK) using a new communication protocol, **characterized in that** said unit comprises:
- hardware resources (305) including a first connector (303) designed to be connected to a communication connector (209) of said smart device, and
- storage means (309) containing at least a part of a modular high-level pilot (211) of said communication connector (209), said high-level pilot being specific to said new communication protocol and in compliance with at least one predefined programming interface (213) of an application of said smart device to establish a correspondence between said predefined programming interface and messages specific to said new communication protocol.

15. The interface unit according to claim 14, **characterized in that** it comprises:
- a communication interface (307) designed to be connected to the network (NWK) to establish a connection between the smart device (201) and said network, and
- protocol matching means (321) connected between the first connector (303) and said communication interface for updating of said smart device with respect to a new communication medium of said network.
